(19) Europäisches Patentamt

European Patent Office

Office européen des brevets

(11) **EP 0 845 470 A2**

(12) **EUROPÄISCHE PATENTANMELDUNG**

(43) Veröffentlichungstag:
03.06.1998 Patentblatt 1998/23

(51) Int. Cl.⁶: **C07F 7/18**

(21) Anmeldenummer: 97117095.6

(22) Anmeldetag: 02.10.1997

(84) Benannte Vertragsstaaten:
AT BE CH DE DK ES FI FR GB GR IE IT LI LU MC NL PT SE
Benannte Erstreckungsstaaten:
AL LT LV RO SI

(30) Priorität: 27.11.1996 DE 19649028

(71) Anmelder:
HÜLS AKTIENGESELLSCHAFT
45764 Marl (DE)

(72) Erfinder:
• Horn, Michael, Dr.
79618 Rheinfelden (DE)
• Rauleder, Hartwig, Dr.
79618 Rheinfelden (DE)
• Seiler, Claus-Dietrich, Dr.
79618 Rheinfelden (DE)
• Monkiewicz, Jarowslaw, Dr.
79618 Rheinfelden (DE)

(54) **Verfahren zur kontinuierlichen Herstellung von Carbonoyloxysilanen**

(57)     Die vorliegende Erfindung betrifft ein Verfahren zur kontinuierlichen Herstellung von Carbonoyloxysilanen durch Umsetzen von Organochlorsilanen mit im wesentlichen überschüssigem Monocarbonsäureanhydrid bei erhöhter Temperatur, Abtrennen des bei der Umsetzung als Nebenprodukt entstandenen Carbonsäurechlorides und Aufarbeitung des verbleibenden Reaktionsgemisches, wobei man zur Aufarbeitung das Reaktionsgemisch in den Mittellauf einer Trennkolonne überführt, unter vermindertem Druck am Kolonnenkopf überschüssiges Carbonsäureanhydrid abdestilliert Carbonoyloxysilan aus der Kolonnenblase gleichförmig abführt, die im entnommenen Carbonoyloxysilan vorliegende Restmenge an acidem Chlor durch Zugabe von Metallcarbonoyloxiden nahezu quantitativ umsetzt und die gebildeten Metallchloride abtrennt.

EP 0 845 470 A2

**Beschreibung**

Die Erfindung betrifft ein Verfahren zur kontinuierlichen Herstellung von Carbonoyloxysilanen durch Umsetzen von Organochlorsilanen mit im wesentlichen überschüssigem Monocarbonsäureanhydrid bei erhöhter Temperatur, Abtrennen des bei der Umsetzung als Nebenprodukt entstandenen Carbonsäurechlorids und Aufarbeitung des verbleibenden Reaktionsgemisches.

Carbonoyloxysilane haben vielseitige Anwendung in der chemischen Industrie gefunden. Sie eignen sich z. B. als vernetzende Siliziumverbindungen bei der Herstellung unter Ausschluß von Wasser lagerfähiger und bei Zutritt von Feuchtigkeit bei Raumtemperatur härtbarer Massen. Beispiele dafür sind Verbindungen wie Methyl-, Ethyl- und Propyl-tris(ethanoyloxy)silan.

Für derartige Silane sind in neuerer Zeit die Anforderungen im Rahmen ihres Einsatzes bezüglich der Reinheit, insbesondere im Hinblick auf den Restgehalt an Chlor in Form von acidem Chlor, extrem angestiegen. Restchlorgehalte in Carbonoyloxysilanen rühren von der nicht vollständigen Umsetzung aller Chloranteile der Organochlorsilan-Einsatzprodukte mit den die Carbonoyloxy-Gruppe in die Reaktion einbringenden Reagenzien her. Bei der vorliegenden Erfindung soll unter acidem Chlor somit Chlor. das in einem Silan an das Siliciumatom gebunden ist, Chlorwasserstoff sowie als Carbonsäurechlorid vorliegendes Chlor, verstanden werden.

Für die Herstellung von Carbonoyloxysilanen in technisch-wirtschaftlichen Maßstäben finden im wesentlichen zwei Verfahrensweisen Anwendung.

Die eine Verfahrensweise bedient sich der Umsetzung von Organochlorsilanen mit Carbonsäuren zu den entsprechenden Organocarbonoyloxysilanen.

Diese Verfahrensweise wird sowohl diskontinuierlich als auch kontinuierlich praktiziert Die diskontinuierliche Herstellung erfordert die Gegenwart eines inerten Lösungsmittels und lange Reaktionszeiten, um die Restgehalte an acidem Chlor auf Werte unter 100 ppm abzusenken (US-PS 2 437 073, US-PS 2 866 800, US-PS 3 974 198, GB 814 011). Kontinuierliche Umsetzungen von Organochlorsilanen mit Carbonsäuren werden in den Schriften DE-PS 2 801 780, DE-PS 3 221 702, EP-OS 0 003 317, US-PS 4 332 956, US-PS 4 329 484, offenbart. Bei Anwendung geringer Carbonsäureüberschüsse, bezogen auf die eingesetzten Organochlorsilan-Mengen, verbleiben Gehalte an acidem Chlor in Größenordnungen von bis zu 50 Gew.-ppm; erst die Anwendung großer Carbonsäureüberschüsse - in der Größenordnung von 50 % - ermöglicht die Herabsetzung der Gehalte an acidem Chlor auf Werte kleiner 1 Gew.-ppm bei Tolerierung unbefriedigender Siloxangehalte.

Die andere Verfahrensweise zur Herstellung von Carbonoyloxysilanen im technischen Maßstab bedient sich der Umsetzung von Organochlorsilan mit Carbonsäureanhydriden zu den entsprechenden Organocarbonoyloxysilanen.

In der FR-PS 1 003 073 wird die diskontinuierliche und gleichzeitige Herstellung von Carbonoyloxysilanen und Carbonsäurechloriden durch Umsetzung von Organochlorsilanen mit Monocarbonsäureanhydriden beschrieben, wobei nach 8stündiger Umsetzungszeit unbefriedigende Produktausbeuten bei nicht erkenntlichen Restchlorgehalten erhalten werden.

Eine kontinuierliche Herstellweise von Carbonoyloxysilanen wird in der EP-PS 0 509 213 offenbart, wobei Organochlorsilane mit Carbonsäureanhydriden in Gegenwart von speziellen Katalysatoren zu Carbonoyloxysilanen und Carbonoylchloriden umgesetzt werden. Die spezielle Verfahrensweise ermöglicht es, den Gehalt an acidem Chlor in den Endprodukten von z B. 800 Gew.-ppm auf 3 Gew.-ppm herabzusetzen. Eine Verringetung der aciden Chlorgehalte unter die Nachweisgrenzen ist mit dieser Verfahrensweise jedoch nur um den Preis stark verlängerter Umsetzungszeiten unter Anwendung gesteigerter Carbonsäureanhydrid-Mengen erzielbar.

In der Literatur werden auch Verfahrensweisen der Herstellung von Carbonoyloxysilanen durch Umsetzung entsprechender Organochlorsilane mit Alkalicarbonoyloxiden in Gegenwart von großen Mengen an inerten Verdünnungsmitteln beschrieben. Diese Verfahrensweisen sind mit dem Anfall von erheblichen Salzmengen verbunden, wobei das Zielprodukt durch aufwendige Waschprozesse aus dem Reaktionsgemisch entfernt werden muß. Diese Verfahrensweisen sind technisch wenig praktikabel und genügen auch nicht den heutigen ökonomischen und ökologischen Anforderungen (US-PS 2 573 302, GB-PS 640 834, DE-PS 870 554, US-PS 2 537 073, US-PS 2 866 800).

Der vorliegenden Erfindung lag daher die Aufgabe zugrunde, ein im wesentlichen kontinuierliches, wirtschaftliches Verfahren zur Herstellung von Carbonoyloxysilanen über die Carbonsäureanhydrid-Route bereitzustellen, das es ermöglicht, ein Produkt mit einem Restgehalt an acidem Chlor von weniger als 2 Gew.-ppm Chlor herzustellen. Ein besonderes Anliegen der vorliegenden Erfindung war es auch, den Anfall erheblicher Lösemittelmengen zu vermeiden sowie den Anfall an Salzen möglichst gering zu halten.

Überraschenderweise wurde nun gefunden, daß es in einfacher und wirtschaftlicher Weise möglich ist, Restgehalte an acidem Chlor in Carbonoyloxysilanen, wie sie insbesondere beim Verfahren gemäß EP-PS 0 509 213 erhalten werden, durch Zugabe von Metallcarbonoyloxiden und Abtrennen der gebildeten Metallchloride auf Werte von deutlich weniger als 1 Gew.-ppm zu verringern. Hierzu sind keine nennenswerten Mengen an Lösemittel erforderlich und darüber hinaus entstehen hierbei keine zusätzlichen Mengen an Siloxanen im Produkt. Auch ist die Menge hierbei anfallender Salze vergleichsweise gering.

Die gestellte Aufgabe wird erfindungsgemäß entsprechend den Angaben der Patentansprüche gelöst.

Gegenstand der vorliegenden Erfindung ist daher ein Verfahren zur kontinuierlichen Herstellung von Carbonoyloxysilanen durch Umsetzen von Organochlorsilanen mit im wesentlichen überschüssigem Monocarbonsäureanhydrid bei erhöhter Temperatur, Abtrennen des bei der Umsetzung als Nebenprodukt entstandenen Carbonsäurechlorids und Aufarbeitung des verbleibenden Reaktionsgemisches, wobei man zur Aufarbeitung das Reaktionsgemisch in den Mittellauf einer Trennkolonne überführt, unter vermindertem Druck am Kolonnenkopf überschüssiges Carbonsäureanhydrid abdestilliert, Carbonoyloxysilan aus der Kolonnenblase gleichförmig abführt, die im entnommenen Carbonoyloxysilan vorliegende Restmenge an acidem Chlor durch Zugabe von Metallcarbonoyloxiden nahezu quantitativ umsetzt und die gebildeten Metallchloride abtrennt.

Die nach dem erfindungsgemäßen Verfahren erhältlichen Carbonoyloxysilane entsprechen der allgemeinen Formel

$$R_a^1 R_b^2 Si(-O-CO-R^3)_{4-a-b},$$

wobei a den Wert 3, 2 oder 1 und
b den Wert 1 oder 0 haben kann und a + b ≤ 3 sind,
bevorzugt werden solche mit a = 1 und b = 0.
$R^1$ sowie $R^2$ stehen hier geeigneterweise für Wasserstoff bzw. gesättigte oder ungesättigte Kohlenwasserstoff-Reste mit jeweils 1 bis 10 C-Atomen, die ggf. funktionelle Gruppen, z. B. Halogen, besitzen können, die unter den gegebenen Reaktionsbedingungen nicht angegriffen werden, sowie für cyclische gesättigte oder ungesättigte Kohlenwasserstoff-Reste mit 6 C-Atomen. $R^1$ und $R^2$ können in der vorliegenden Formel gleich oder verschieden sein. $R^3$ steht in der zuvor genannten Formel insbesondere für einen Wasserstoff-, Methyl-, Ethyl- oder Propyl-Rest.

Vorzugsweise werden nach dem erfindungsgemäßen Verfahren folgende Verbindungen hergestellt.

Vinyl-tris(ethanoyloxy)silan
Ethyl-tris(ethanoyloxy)silan
Methyl-tris(ethanoyloxy)silan
Propyl-tris(ethanoyloxy)silan
2-Chlorethyl-methyl-bis(ethanoyloxy)silan
Ethyl-tris(propanoyloxy)silan
Phenyl-tris(ethanoyloxy)silan

Im allgemeinen kann das erfindungsgemäße Verfahren so ausgeführt werden, daß man ein Organochlorsilan mit im wesentlichen überschüssigem Monocarbonsäureanhydrid unter Zusatz von organischen Basen, deren Salzen oder organischen Säureamiden, die geeigneterweise im vorliegenden Gemisch löslich sind, bei einer Temperatur im Bereich von 25 bis 100 °C durch einen oder mehrere Reaktoren leitet, anschließend das entstandene Carbonsäurechlorid entfernt, beispielsweise unter Vakuum in einem Destillationsreaktor. Als basische organische Komponenten können hier beispielsweise tertiäre, sekundäre oder primäre Amine, nicht-substituierte und/oder N-substituierte Säureamide, wie z. B. Triethylamin, N,N-Dimethylformamid, zugesetzt werden. Das nach Abtrennung des entstandenen Carbonsäurechlorids verbleibende Reaktionsgemisch wird zur Gewinnung des Carbonoyloxysilans aufgearbeitet. Geeigneterweise verfährt man bei der Aufarbeitung so, daß man das Reaktionsgemisch in den Mitteleinlauf einer Kolonne überführt, unter Vakuum am Kolonnenkopf überschüssiges Carbonsäureanhydrid aodestilliert und Carbonoyloxysilan aus der Kolonnenblase abzieht. So entnommenes Carbonoyloxysilan weist in der Regel einen Gehalt an acidem bzw. hydrolysierbarem Chlor von 2 Gew.-ppm und mehr auf. Im allgemeinen setzt man nachfolgend die im entnommenen Carbonoyloxysilan vorliegende Restmenge an acidem Chlor durch Zugabe von Metallcarbonoyloxiden nahezu quantitativ um und trennt die gebildeten Metallchloride ab.

Für die Entfernung von Restgehalten an acidem Chlor aus dem entnommenen Carbonoyloxysilan können beim erfindungsgemäßen Verfahren im allgemeinen alle bekannten Metallcarbonoyloxide der Elemente des Periodensystems verwendet werden, die in geeigneter Weise salzartige Metallchloride bilden, einige bevorzugte Beispiele seinen nachfolgend aufgeführt. Natriumformiat, Natriumacetat, Natriumpropionat, Natriumbutyrat, Kaliumacetat, Magnesiumacetat, Calciumacetat, Bariumacetat, Zinkacetat.

Besonders bevorzugt wird als Metallcarbonoyloxid ein Carbonoyloxid der Alkalielemente und/oder Erdalkalielemente eingesetzt. Ganz besonders bevorzugt sind die Carbonoyloxide des Natriums. Geeigneterweise setzt man die Metallcarbonoyloxide gelöst in der zum verwendeten Carbonoyloxid korrespondierenden Carbonsäure ein.

Üblicherweise führt man die Umsetzung der Restmenge an acidem Chlor im Carbonoyloxysilan mit mindestens einem Metallcarbonoyloxid kontinuierlich bei einer Temperatur im Bereich von 0 bis 200 °C, vorzugsweise bei 0 bis 130 °C, besonders vorzugsweise bei 20 bis 80 °C, durch. In Abhängigkeit von der Beschaffenheit des zu behandelnden Substrates sollte die Umsetzungstemperatur ggf. so gewählt werden, daß die Umsetzungsdauer und die Löslichkeit der entstehenden Metallsalze im Substrat minimiert sind. Die Umsetzung kann sowohl bei verringertem Druck, beispielsweise oberhalb 400 mbar abs., als auch bei Normaldruck sowie erhöhtem Druck, beispielsweise bis 2 bar abs., durchgeführt werden. Es kann ferner von Vorteil sein, die Umsetzung der Organocarbonoyloxysilane mit den Metallcarbonoyloxiden unter Rühren durchzuführen.

Vorzugsweise verwendet man dabei die Carbonoyloxide in solchen Mengen, daß kein Überschuß über die stöchiometrisch notwendige Menge hinaus, bezogen auf den Gehalt an acidem Chlor im zu behandelnden Substrat, vorliegt. Die vollständige Entfernung des Gehaltes an acidem Chlor in Organocarbonoyloxysilanen kann man entweder durch eine einmalige Zugabe einer entsprechenden Menge eines Metallcarbonoyloxides erzielen oder auch in der Form, daß man geeigneterweise von der zur vollständigen Entfernung der Gehalte an acidem Chlor im Substrat stöchiometrisch erforderlichen Menge an Carbonoyloxid nur ca. 70 - 80 % zudosiert, umsetzen läßt, erneut den Restgehalt an acidem Chlor bestimmt und erneut, je nach Höhe des im Substrat verbliebenen Gehaltes an acidem Chlor, 70 - 80 % der stöchiometrisch erforderlichen Carbonoyloxidmenge zudosiert, d. h. eine kontinuierlich durchgeführte Produktaufarbeitung unter Einbeziehung einer quasi kontinuierlichen Titration.

Die Abtrennung der bei der Umsetzung gebildeten Metallchloride kann ebenfalls kontinuierlich in verschiedener Weise erfolgen, beispielsweise durch Filtration oder Zentrifugieren oder Dekantieren. Vorzugsweise entfernt man die Metallsalze durch Zentrifügieren unter Verwendung eines kontinuierlich arbeitenden Separators.

Zusätzlich können durch Destillation bei der Aufarbeitung der Organocarbonoyloxysilane im Rahmen des erfindungsgemäßen kontinuierlichen Verfahrens gegebenenfalls noch im Produkt enthaltene Carbonsäuremengen entfernt werden.

Auch kann die Methode der Destillation zur Trennung von Produkt und Metallsalz angewandt werden. Diese Methode wird insbesondere dann benutzt, wenn beim erfindungsgemäßen Verfahren Produkte mit besonders niedrigem Siloxananteil erhalten werden sollen.

In der vorliegenden Erfindung sollen unter den von Restchlorgehalten befreiten Organocarbonoyloxysilanen solche Produkte verstanden werden, deren Gehalt an acidem Chlor im allgemeinen weniger als 2 Gew.-ppm, insbesondere weniger als 1 Gew.-ppm, vorzugsweise weniger als 0,5 Gew.-ppm an acidem Chlor, besonders vorzugsweise weniger gleich 0,1 Gew.-ppm, beträgt.

Mit dem erfindungsgemäßen Verfahren wird ein Verfahren bereitgestellt, das es ermöglicht, kontinuierlich Carbonoyloxysilane mit deutlich weniger als 1 Gew.-ppm acidem Chlor in guter wirtschaftlicher Weise herzustellen.

Die Erfindung wird durch die nachfolgenden Beispiele näher erläutert:

## Beispiele

### Vergleichsbeispiel A

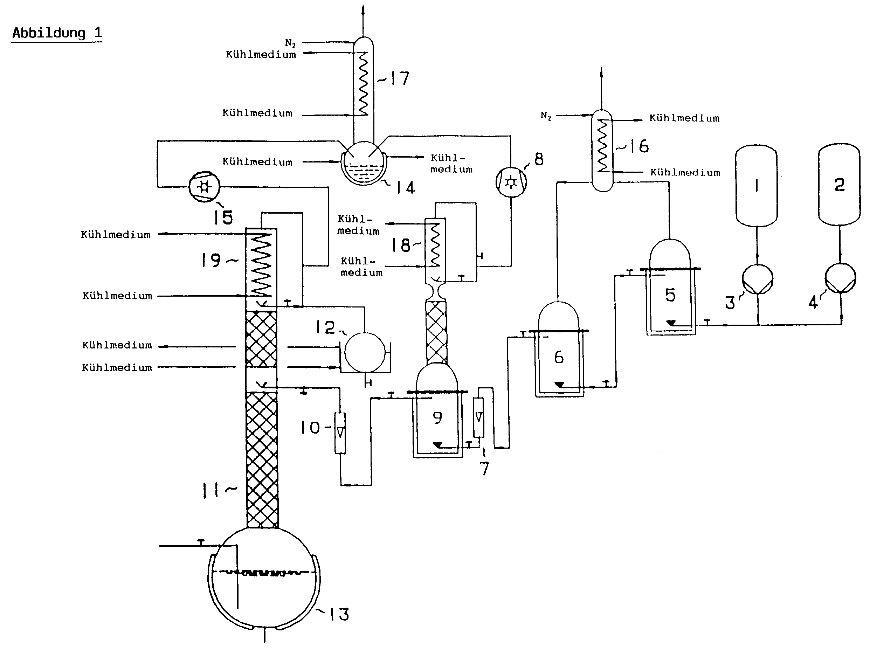

Abbildung 1 zeigt das Schema einer Anlage zur Herstellung von Carbonoyloxysilanen. Ethyltrichlorsilan wird in den Vorlagebehälter 1, Ethansäureanhydrid in die Vorlage 2 gefüllt. Mittels der Dosierpumpen 3 bzw. 4 werden 157 g (0,96 ml) Ethyltrichlorsilan pro Stunde und 352 g (3,46 mol) Ethansäureanhydrid pro Stunde, versetzt mit 51 mg Triethylamin, in den unteren Teil des Reaktors 5 (Vol. = 1 Lit.) eingespeist, in dem die Erwärmung der Einsatzstoffe auf 60 °C erfolgt. Nach Durchlaufen des Reaktors 5 gelangt das Reaktionsgemisch über den Kühler 16 in den Reaktor 6 (Vol. = 1 Lit.), in dem es auf 60 °C gehalten wird und aus dem es anschließend über den Rotamesser 7 in einer Menge von ca. 510 g pro Stunde in den Destillationsreaktor 9 (Vol. = 1 Lit.) eingegeben wird. In diesem wird das Reaktionsgemisch auf 90 °C erwärmt und das bisher gebildete und sich noch bildende Ethanoylchlorid bei einem Druck von 50 bis 60 mbar (Vakuumpumpe 8) aus dem Reaktionsgemisch abdestilliert und über den Kühler 18 in die gekühlte Vorlage 14 abgeführt. Die pro Stunde aufgefangene Menge Ethanoylchlorid in der Vorlage 14 beträgt ca. 216 g (2,76 mol).

Über den Rotamesser 10 wird das im Oberteil des Destillationsreaktors 9 abgezogene Produkt in den Mitteleinlauf der Destillationssäule 11 der Kolonne aufgegeben, die aus einem 1,60 m langen Glasrohr mit einem Durchmesser von 5 cm besteht und mit Sattelkörpern von 6 mm Durchmesser gefüllt ist. Der Kühler 19 des Kolonnenkopfes und die Destillatvorlage 12 werden mit einer Kühlflüssigkeit (- 27 °C) beaufschlagt. Den unteren Abschluß der Kolonne bildet ein 4-l-Doppelmantelkolben 13, beheizt durch einen Thermostaten (Umlauftemperatur etwa 125 °C). Bei einem Kolonneninnendruck von 5 bis 7 mbar und einer Temperatur von ca. 110 °C in der Kolonnenblase 13 wird das eingespeiste Rohprodukt aufgearbeitet. Aus dem zur Hälfte mit Flüssigkeit befüllten Doppelmantelkolben 13 wird Ethyltris(ethanoyloxy)silan ständig in einem Maß abgenommen, daß der Flüssigkeitsspiegel im Kolben 13 unverändert bleibt. Im oberen Teil der Kolonne destilliert überschüssiges Ethansäureanhydrid ab, welches in der Destillatvorlage 12 gesammelt wird. Am Kopf der Kolonne wird über den Kühler 19 und die Vakuumpumpe 15 das restliche Ethanoylchlorid in die mit dem Kühler 17 versehene Vorlage 14 abdestilliert.

Das dem Doppelmantelkolben 13 entnommene Produkt besteht aus

| Ethyl-tris(ethanoyloxy)silan | 97,2 Gew.-% |
|---|---|
| Siloxane | 1,7 Gew.-% |
| Ethansäureanhydrid | 1,1 Gew.-% |
| Chlor, acid | 3 ppm |

### Vergleichsbeispiel B

Die in Vergleichsbeispiel A beschriebene Arbeitsweise wird wiederholt unter Vornahme nachfolgender Änderungen:

Anstelle von 157 g (0,96 mol) Ethyltrichlorsilan pro Stunde und 352 g (3,46 mol) Ethansäureanhydrid pro Stunde werden 235,5 g (1,44 mol) Ethyltrichlorsilan pro Stunde und 528 g (5,19 mol) Ethansäureanhydrid pro Stunde, versetzt mit 76 mg Triethylamin, eingespeist.

Das dem Doppelmantelkolben **13** entnommene Produkt, ca. 230 g pro Stunde, besteht aus:

| Ethyl-tris(ethanoyloxy)silan | ca. 97,7 Gew.-% |
|---|---|
| Siloxane | ca. 1,2 Gew.-% |
| Ethansäureanhydrid | ca. 1,1 Gew.-% |
| Chlor, acid | ca. 35 ppm |

**Beispiel 1**

Die in Vergleichsbeispiel B beschriebene Verfahrensweise wird wiederholt unter Vornahme nachfolgender Änderungen:

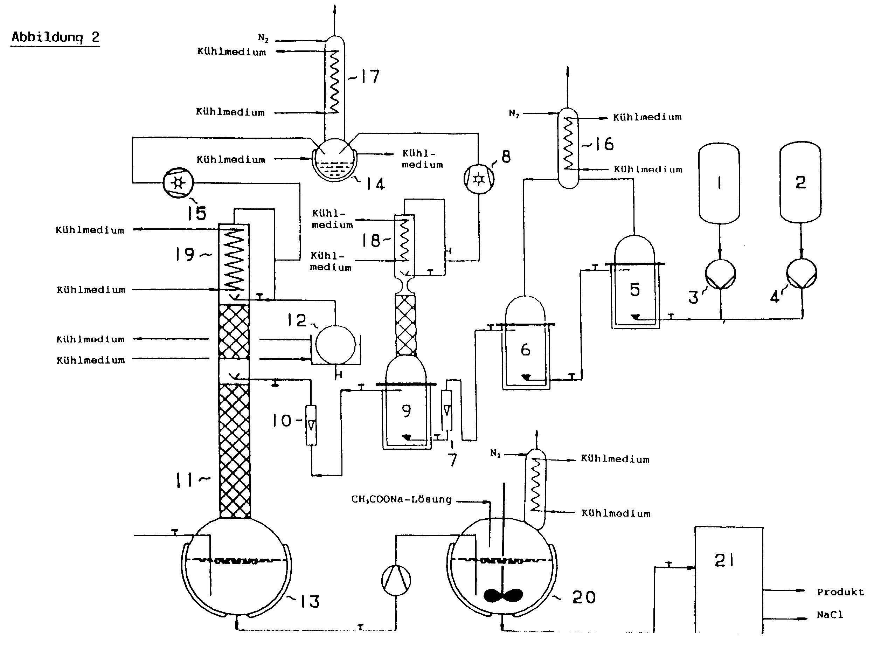

Die in Abbildung 1 dargestellte Apparatur wird um einen Vorlagekolben **20**, der mit vorgeschalteter Fördereinrichtung, Doppelmantel, Rühreinrichtung, aufgesetztem Kühler, Thermometer und Bodenablaßstutzen ausgestattet ist, ergänzt, vgl. Abbildung 2.
Aus der Kolonnenblase **13** wird ein Produktgemisch konstanter Zusammensetzung dessen Gehalt an acidem Chlor 41 Gew.-ppm beträgt, abgezogen und in den Vorlagekolben **20**, der mittels eines Wärmekreislaufes auf 90 °C temperiert ist. überführt. Die gleichmäßig der Kolonnenblase **13** entnommene Produktmenge beträgt ca. 230 g pro Stunde.

Dem Vorlagekolben **20** wird im Verlauf einer Stunde eine Menge von 0,266 g einer Lösung von 8,0 g Natriummethanoyloxid in 92,0 g Ethansäure zugesetzt. Die in dem Vorlagekolben sich bildende Suspension aus Natriumchlorid und Produkt wird abgekühlt und über einen Separator **21** geleitet, ggf. anschließend noch über ein Feinfilter. Das von Natriumchlorid befreite Produkt besteht aus:

| Ethyl-tris(ethanoyloxy)silan | 97,6 Gew.-% |
|---|---|
| Siloxane | 1,1 Gew.-% |
| Ethansäureanhydrid | 1,2 Gew.-% |
| Ethansäure | 0,1 Gew.-% |
| Chlor, acid | ca. 0,1 Gew.-ppm |

**Patentansprüche**

1. Verfahren zur kontinuierlichen Herstellung von Carbonoyloxysilanen durch Umsetzen von Organochlorsilanen mit im wesentlichen überschüssigem Monocarbonsäureanhydrid bei erhöhter Temperatur, Abtrennen des bei der Umsetzung als Nebenprodukt entstandenen Carbonsäurechlorides und Aufarbeitung des verbleibenden Reaktionsgemisches,
dadurch gekennzeichnet,
daß man zur Aufarbeitung das Reaktionsgemisch in den Mittellauf einer Trennkolonne überführt, unter vermindertem Druck am Kolonnenkopf überschüssiges Carbonsäureanhydrid abdestilliert, Carbonoyloxysilan aus der Kolonnenblase gleichförmig abführt, die im entnommenen Carbonoyloxysilan vorliegende Restmenge an acidem Chlor durch Zugabe von Metallcarbonoyloxiden nahezu quantitativ umsetzt und die gebildeten Metallchloride abtrennt.

2. Verfahren nach Anspruch 1,
dadurch gekennzeichnet,
daß man die vorliegende Restmenge an acidem Chlor durch Zugabe von mindestens einem Metallcarbonoyloxid nahezu quantitativ umsetzt und das jeweilig eingesetzte Metallcarbonoyloxid in seiner Carbonoyloxy-Komponente mit der Carbonoyloxy-Komponente des Carbonoyloxysilans korrespondiert.

3. Verfahren nach Anspruch 1 oder 2,
dadurch gekennzeichnet,
daß man die Metallcarbonoyloxide in gelöster Form dem entnommenen Carbonoyloxysilan zugibt

4. Verfahren nach Anspruch 3,
dadurch gekennzeichnet,
daß man das Metallcarbonoyloxid in der zu dem jeweiligen Carbonoyloxid korrespondierenden Carbonsäure löst.

5. Verfahren nach mindestens einem der Ansprüche 1 bis 4,
dadurch gekennzeichnet,
daß man als Metallcarbonoyloxid ein Carbonoyloxid eines Alkalielementes und/oder eines Erdalkalielementes einsetzt.

6. Verfahren nach mindestens einem der Ansprüche 1 bis 5,
dadurch gekennzeichnet,
daß man die Metallcarbonoyloxide oder deren Lösungen in bis zu äquivalenter Menge bezüglich der jeweils aktuell vorliegenden Menge an acidem Chlor dem Carbonoyloxysilan zugibt.

7. Verfahren nach mindestens einem der Ansprüche 1 bis 6,
   dadurch gekennzeichnet,
   daß man die Umsetzung des aciden Chlors mit Metallcarbonoyloxiden bei einer Temperatur zwischen 0 bis 130 °C kontinuierlich durchführt.

8. Verfahren nach Anspruch 7,
   dadurch gekennzeichnet,
   daß man die Umsetzung des aciden Chlors mit Metallcarbonoyloxiden bei einer Temperatur zwischen 20 bis 80 °C kontinuierlich durchführt.

9. Verfahren nach mindestens einem der Ansprüche 1 bis 8,
   dadurch gekennzeichnet,
   daß man die Umsetzung des aciden Chlors mit Metallcarbonoyloxiden unter Rühren durchführt.

10. Verfahren nach mindestens einem der Ansprüche 1 bis 9,
   dadurch gekennzeichnet,
   daß das Abtrennen der bei der Umsetzung gebildeten Metallchloride durch eine kontinuierliche betriebene Filtration erfolgt.

Abbildung 1

Abbildung 2

EP 0 845 470 A2